# FASCICULE DE BREVET EUROPEEN

(11) **EP 3 671 059 B1**
(45) Date de publication et mention de la délivrance du brevet: **09.02.2022**
(21) Numéro de dépôt: 19216543.9
(22) Date de dépôt: 16.12.2019
(51) Int. Cl.: F24F 12/00, F24F 13/20

(54) **APPAREIL DE TRAITEMENT CLIMATIQUE ET DE RENOUVELLEMENT D'AIR POUR UN LOCAL SITUÉ DANS UN BÂTIMENT**
KLIMA- UND LUFTAUFBEREITUNGSANLAGE FÜR EINEN RAUM IN EINEM GEBÄUDE
DEVICE FOR CLIMATE TREATMENT AND AIR RENEWAL FOR A ROOM LOCATED IN A BUILDING

(30) Priorité: 18.12.2018 FR 1873187
(43) Date de publication de la demande: 24.06.2020
(73) Titulaire: MULLER ET CIE, 75018 Paris (FR)
(72) Inventeur: FEVRIER, Bruno, 53100 Mayenne (FR); MARRACHE, Henri, 94270 Le Kremlin Bicetre (FR)
(74) Mandataire: Lavoix

(56) Documents cités:
- EP-A1- 0 055 000
- WO-A2-2006/080599
- DE-A1- 3 027 447

## Description

La présente invention concerne un appareil de traitement climatique et de renouvellement d'air pour un local situé dans un bâtiment, comportant : un premier circuit d'air intérieur, comprenant une première entrée et une première sortie reliées à l'intérieur du local ; ainsi qu'un premier ventilateur et un premier échangeur thermique disposés entre les premières entrée et sortie ; un deuxième circuit d'air neuf, comprenant : une deuxième entrée reliée à l'extérieur du bâtiment ; une deuxième sortie reliée à l'intérieur du local ; ainsi qu'un deuxième ventilateur disposé entre les deuxièmes entrée et sortie ; un troisième circuit d'air extrait, comprenant : une troisième entrée reliée à l'intérieur du local ; une troisième sortie reliée à l'extérieur du bâtiment ; ainsi qu'un troisième ventilateur disposé entre les deuxièmes entrée et sortie, un deuxième échangeur thermique air/air étant disposé en aval des deuxième et troisième entrées de sorte à permettre un échange thermique entre l'air extrait et l'air neuf ; et un quatrième circuit d'un premier fluide, le premier échangeur thermique étant disposé sur ledit quatrième circuit de sorte à permettre un échange thermique entre ledit premier fluide et l'air intérieur.

L'invention s'applique particulièrement aux locaux de bâtiments recevant du public, tels que des bureaux, des salles de réunion, des chambres d'hôtel ou des locaux hospitaliers.

Dans de tels locaux, tels que les immeubles de bureau, il est connu d'assurer le traitement climatique et le renouvellement d'air au moyen d'une installation telle que décrite dans le document FR3011913 au nom de la Demanderesse.

L'installation peut avoir la forme d'une centrale de traitement d'air, reliée à plusieurs locaux par des gaines d'insufflation et d'extraction d'air. De telles centrales de traitement, dimensionnées pout traiter de gros volumes d'air, sont généralement encombrantes. Il en est de même pour les nombreuses gaines techniques nécessaires.

Un appareil conforme au préambule de la revendication 1 est connu par exemple du document WO 2006/080599 A2.

Il est donc avantageux de proposer un appareil de traitement climatique et de renouvellement d'air apte à gérer individuellement un local, en présentant un faible encombrement et des facilités d'installation.

A cet effet, l'invention a pour objet un appareil tel que défini en revendication 1.

Suivant d'autres aspects avantageux de l'invention, l'appareil comporte l'une ou plusieurs des caractéristiques suivantes, prises isolément ou suivant toutes les combinaisons techniquement possibles :
- le deuxième circuit d'air neuf comprend en outre : une branche de contournement du deuxième échangeur thermique ; et une première vanne disposée sur ladite branche de contournement ;
- la deuxième sortie débouche sur le premier circuit en amont du premier échangeur thermique ;
- le premier circuit comprend en outre un troisième échangeur thermique disposé entre le premier échangeur thermique et la première sortie, ledit troisième échangeur thermique étant disposé sur un cinquième circuit d'un deuxième fluide, distinct du quatrième circuit de premier fluide ;
- le premier fluide est de l'eau ; le deuxième fluide est un fluide frigorigène ; le quatrième circuit comprend : une quatrième entrée et une quatrième sortie ménagées sur la première enceinte externe ; et un quatrième échangeur thermique eau/fluide frigorigène ; et le cinquième circuit forme une boucle et fait partie d'une pompe à chaleur disposée l'intérieur de la première enceinte externe, ladite pompe à chaleur comprenant un compresseur et un détendeur reliés aux troisième et quatrième échangeurs thermiques par ledit cinquième circuit, le compresseur comprenant une vanne quatre voies à inversion de cycle.

Par ailleurs, il est souhaitable de disposer de possibilités d'aménagement de locaux recevant du public, de manière à transformer un bureau en salle de réunion et inversement. Ces deux utilisations d'un même local impliquent un nombre d'occupants totalement différent, donc des débits de renouvellement d'air différents.

Afin de résoudre ce problème, l'invention se rapporte en outre à un ensemble de traitement climatique et de renouvellement d'air pour un local situé dans un bâtiment, comportant : un appareil de traitement climatique et de renouvellement d'air tel que décrit ci-dessus, et un module complémentaire de renouvellement d'air, configuré sous forme monobloc et délimité par une deuxième enceinte externe destinée à être disposée à l'intérieur du local, ledit module complémentaire comprenant : un sixième circuit d'air, comprenant une sixième entrée, une sixième sortie et un quatrième ventilateur disposé entre lesdites sixièmes entrée et sortie ; un septième circuit d'air, comprenant une septième entrée, une septième sortie et un cinquième ventilateur disposé entre lesdites septièmes entrée et sortie ; un cinquième échangeur thermique air/air disposé sur les sixième et septième circuits ; et quatre bouches de connexion ménagées en surface de la deuxième enceinte externe, chacune desdites bouches de connexion étant reliée à l'une des sixièmes et septièmes entrées et sorties ; chacune des bouches de connexion du module complémentaire étant apte à être raccordée à l'une des bouches de connexion de l'appareil de traitement climatique et de renouvellement d'air.

L'invention se rapporte en outre à une installation de traitement climatique et de renouvellement d'air, comprenant : un bâtiment comprenant une paroi extérieure, ladite paroi définissant un local situé dans ledit bâtiment ; un appareil de traitement climatique et de renouvellement d'air tel que décrit ci-dessus ; et deux canalisations d'air formant saillie par rapport à la première enceinte externe, chacune de la bouche d'entrée et de la bouche de sortie d'air extérieur étant reliée à l'une desdites canalisations d'air ; dans laquelle : la paroi extérieure comprend deux orifices traversants débouchant sur le local d'une part, et sur l'extérieur du bâtiment d'autre part ; et la première enceinte externe de l'appareil est située dans le local, chacune des deux canalisations d'air étant disposée dans l'un desdits orifices traversants.

Suivant d'autres aspects avantageux de l'invention, l'installation comporte l'une ou plusieurs des caractéristiques suivantes, prises isolément ou suivant toutes les combinaisons techniquement possibles :
- l'installation comprend en outre un module complémentaire de renouvellement d'air, configuré sous forme monobloc et délimité par une deuxième enceinte externe disposée à l'intérieur du local, ledit module complémentaire comprenant : un sixième circuit d'air, comprenant une sixième entrée, une sixième sortie et un quatrième ventilateur disposé entre lesdites sixièmes entrée et sortie ; chacune desdites sixièmes entrée et sortie étant formée par une bouche de connexion ménagée en surface de la deuxième enceinte externe ; un septième circuit d'air, comprenant une septième entrée, une septième sortie et un cinquième ventilateur disposé entre lesdites septièmes entrée et sortie ; chacune desdites septièmes entrée et sortie étant formée par une bouche de connexion ménagées en surface de la deuxième enceinte externe ; et un cinquième échangeur thermique air/air disposé sur les sixième et septième circuits ; la sixième entrée et la septième sortie étant reliées respectivement à la première et à la quatrième bouches de connexion de l'appareil de traitement climatique et de renouvellement d'air ;
- la sixième sortie et la septième entrée sont reliées respectivement à la deuxième et à la troisième bouches de connexion de l'appareil de traitement climatique et de renouvellement d'air ;
- la sixième sortie et la septième entrée ouvrent sur l'intérieur du local ;
- la sixième sortie est reliée à la deuxième bouche de connexion de l'appareil de traitement climatique et de renouvellement d'air ; et la septième entrée ouvre sur l'intérieur du local ;
- la septième entrée est reliée à la troisième bouche de connexion de l'appareil de traitement climatique et de renouvellement d'air ; et la sixième sortie ouvre sur l'intérieur du local.

L'invention sera mieux comprise à la lecture de la description qui va suivre, donnée uniquement à titre d'exemple non limitatif et faite en se référant aux dessins sur lesquels :
- [Fig 1] la figure 1 est un schéma de principe d'une installation comprenant un appareil de traitement climatique et de renouvellement d'air selon un premier mode de réalisation; ce mode de réalisation n'est pas conforme à l'invention mais il est utile pour la compréhension de celle-ci ;
- [Fig 2] [Fig 3] [Fig 4] [Fig 5] les figures 2 à 5 sont des schémas de principe d'une installation comprenant un ensemble de traitement climatique et de renouvellement d'air selon un deuxième mode de réalisation, dans des configurations différentes; ce mode de réalisation est conforme à l'invention ; ; et
- [Fig 6] la figure 6 est un schéma de principe d'une installation comprenant un appareil de traitement climatique et de renouvellement d'air selon un troisième mode de réalisation; ce mode de réalisation n'est pas conforme à l'invention mais il est utile pour la compréhension de celle-ci.

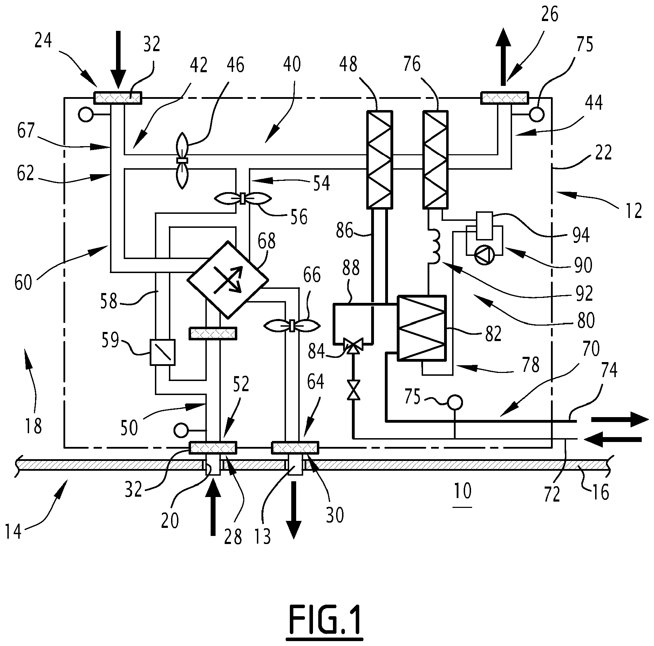

La figure 1 représente une installation 10 de traitement climatique et de renouvellement d'air selon un premier mode de réalisation, comprenant un appareil 12 de traitement climatique et de renouvellement d'air.

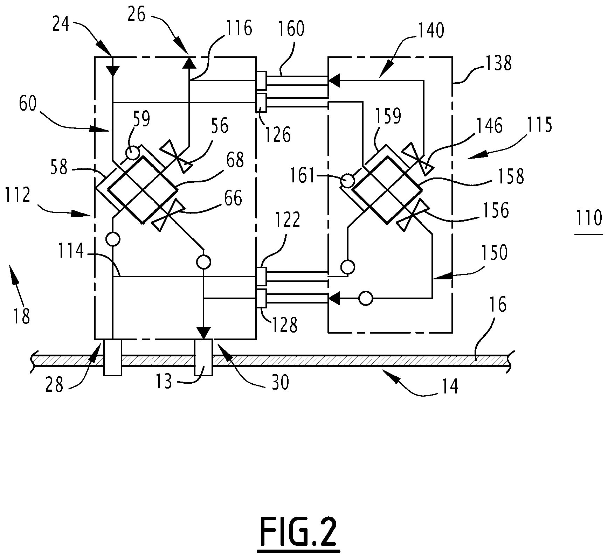

Les figures 2 à 5 représentent une installation 110 de traitement climatique et de renouvellement d'air selon un deuxième mode de réalisation, comprenant un appareil 112 de traitement climatique et de renouvellement d'air.

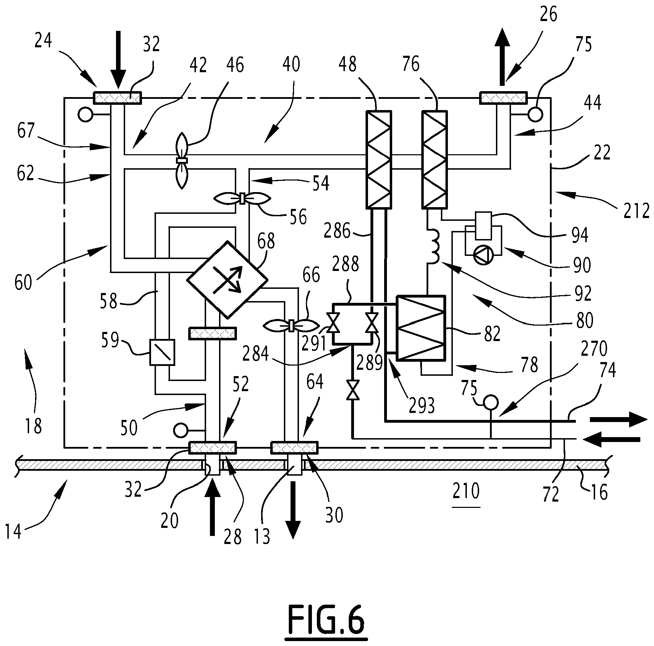

La figure 6 représente une installation 210 de traitement climatique et de renouvellement d'air selon un troisième mode de réalisation, comprenant un appareil 212 de traitement climatique et de renouvellement d'air.

Chaque installation 10, 110, 210 comporte l'appareil 12, 112, 212, deux prises ou canalisations d'air 13 et un bâtiment 14. L'installation 110 comporte en outre un module complémentaire 115 de renouvellement d'air, qui sera décrit ultérieurement.

Le bâtiment 14 comprend une paroi extérieure 16, qui contribue à définir un local 18 situé dans le bâtiment 14. De manière optionnelle, le local 18 est également délimité par des cloisons internes (non représentées) du bâtiment 14.

La paroi extérieure 16 comprend deux orifices traversants 20 débouchant à la fois sur le local 18 et sur l'extérieur du bâtiment 14. Chaque canalisation d'air 13 est disposée dans un orifice traversant 20.

L'appareil 12 et l'appareil 212, respectivement selon les premier et troisième modes de réalisation, vont maintenant être décrits simultanément, les éléments communs étant désignés par les mêmes numéros de référence.

La description qui suit s'applique également à l'appareil 112 selon le deuxième mode de réalisation. Un complément de description de l'appareil 112 sera effectué ultérieurement.

L'appareil 12, 212 est configuré sous forme monobloc et comprend une enceinte externe 22, qui délimite essentiellement un contour externe dudit appareil. L'enceinte externe 22 a de préférence une forme sensiblement parallélépipédique et est disposée dans le local 18, à proximité de la paroi extérieure 16.

L'appareil 12, 212 est par exemple configuré pour être disposé dans un plénum situé au-dessus d'un faux plafond ou sous un faux plancher du local 18 ; ou encore en allège fenêtre, c'est-à-dire sous une fenêtre ménagée dans la paroi extérieure 16 ; ou encore en trumeau, c'est-à-dire entre deux fenêtres de ladite paroi extérieure.

Une ouverture d'entrée 24 et une ouverture de sortie 26 d'air intérieur sont ménagées en surface de l'enceinte externe 22, préférentiellement orientées à l'opposé de la paroi extérieure 16. En outre, une bouche d'entrée 28 et une bouche de sortie 30 d'air extérieur sont formées sur l'enceinte externe 22 et préférentiellement orientées vers la paroi extérieure 16. Chacune des bouches d'entrée 28 et de sortie 30 est raccordée à une canalisation d'air 20.

Les ouvertures d'entrée 24 et de sortie 26 ainsi que les bouches d'entrée 28 et de sortie 30 sont de préférence équipées de grilles ou de filtres 32.

L'appareil 12, 212 comprend en outre les éléments ci-après, disposés à l'intérieur de l'enceinte externe 22 :
L'appareil 12, 212 comprend notamment un premier circuit 40 d'air intérieur, comprenant une première entrée 42, une première sortie 44, ainsi qu'un premier ventilateur 46 et un premier échangeur thermique 48 disposés entre les premières entrée et sortie. Les premières entrée 42 et sortie 44 sont respectivement reliées aux ouvertures d'entrée 24 et de sortie 26.

L'appareil 12, 212 comprend en outre un deuxième circuit 50 d'air neuf, comprenant : une deuxième entrée 52 ; une deuxième sortie 54 ; et un deuxième ventilateur 56 disposé entre les deuxièmes entrée et sortie.

La deuxième entrée 52 est reliée à la bouche d'entrée 28 d'air extérieur. La deuxième sortie 54 est reliée à l'ouverture de sortie 26 d'air intérieur. De préférence, la deuxième sortie 54 débouche sur le premier circuit 40, en amont du premier échangeur 48.

L'appareil 12, 212 comprend en outre un troisième circuit 60 d'air extrait, comprenant : une troisième entrée 62 ; une troisième sortie 64 ; et un troisième ventilateur 66 disposé entre les troisièmes entrée et sortie.

La troisième entrée 62 est reliée à l'ouverture d'entrée 24. Plus précisément, l'ouverture d'entrée 24 débouche sur un répartiteur 67, disposée à l'intérieur de l'enceinte externe et matérialisant les première 42 et troisième 62 entrées. La troisième sortie 64 est reliée à la bouche de sortie 30 d'air extérieur.

L'appareil 12, 212 comprend en outre un deuxième échangeur thermique 68 air/air, disposé à la fois sur le deuxième 50 et sur le troisième 60 circuits, en aval des deuxième 52 et troisième 62 entrées. Le deuxième échangeur thermique 68 permet un échange thermique entre l'air extrait et l'air neuf.

De préférence, le deuxième circuit 50 comporte en outre : une branche de contournement 58, en parallèle du deuxième échangeur 68 ; et une première vanne 59 disposée sur ladite branche de contournement. Une telle configuration du deuxième circuit d'air neuf est notamment décrite dans le document FR3011913 au nom de la Demanderesse.

L'appareil 12, 212 comprend en outre un quatrième circuit 70, 270 d'un premier fluide. Le premier échangeur thermique 48 est disposé sur ledit quatrième circuit de sorte à permettre un échange thermique entre ledit premier fluide et l'air intérieur du local 18.

Dans le mode de réalisation représenté, le quatrième circuit 70, 270 est un circuit d'eau comprenant une quatrième entrée 72 et une quatrième sortie 74. Lesdites quatrièmes entrée 72 et sortie 74 sont respectivement reliées à une conduite d'arrivée d'eau froide et à une conduite d'évacuation d'eau (non représentées) du bâtiment 14.

L'appareil 12, 212 comprend en outre des sondes thermiques 75 disposées sur les différents circuits d'air et d'eau.

De préférence, les quatrièmes entrée 72 et sortie 74 sont matérialisées par des prises d'eau disposées sur l'enveloppe externe 22, orientées vers la paroi 16 ou perpendiculairement à ladite paroi.

De préférence, comme dans le mode de réalisation représenté, le premier circuit 40 comprend en outre un troisième échangeur thermique 76, disposé entre le premier échangeur thermique 48 et la première sortie 44. Le troisième échangeur thermique 76 est disposé sur un cinquième circuit 78 d'un deuxième fluide, distinct du quatrième circuit 70, 270.

Dans les modes de réalisation représentés aux figures 1 et 6, le cinquième circuit 78 est un circuit de fluide frigorigène appartenant à une pompe à chaleur 80 disposée dans l'enceinte externe 22. En particulier, le quatrième circuit 70, 270 comprend un quatrième échangeur thermique 82 eau/fluide frigorigène.

Le cinquième circuit 78 forme une boucle disposée à l'intérieur de l'enceinte externe 22. La pompe à chaleur 80 comprend un compresseur 90 et un détendeur 92 reliés aux troisième 76 et quatrième 82 échangeurs thermiques par le cinquième circuit 78. De préférence, le compresseur 90 comprend une vanne quatre voies 94 à inversion de cycle.

Dans l'appareil 12 de la figure 1, le quatrième circuit 70 comprend une vanne trois voies 84 reliant la quatrième entrée 72 à une première 86 et à une deuxième 88 branches distinctes. Chacune desdites première 86 et deuxième 88 branches est reliée au quatrième échangeur thermique 82. Le premier échangeur thermique 48 est disposé sur la première branche 86 entre la vanne trois voies 84 et le quatrième échangeur thermique 82.

Une telle configuration du quatrième circuit 70 d'eau et du cinquième circuit 78 de fluide frigorigène est notamment décrite dans le document FR3011913 au nom de la Demanderesse.

Dans l'appareil 212 de la figure 6, le quatrième circuit 270 comprend un répartiteur 284 reliant la quatrième entrée 72 à une première 286 et à une deuxième 288 branches distinctes. Chacune desdites première 286 et deuxième 288 branches est équipée, respectivement, d'une première 289 et d'une deuxième 291 vanne à proximité du répartiteur 284. Le premier échangeur thermique 48 est disposé sur la première branche 286 et le quatrième échangeur thermique 82 est disposé sur la deuxième branche 288. En aval des échangeurs thermiques, les première 286 et deuxième 288 branches se rejoignent au niveau d'un collecteur 293 relié à la sortie 74.

Les première 289 et deuxième 291 vannes permettent de réguler de manière indépendante un débit d'eau dans chacune des première 286 et deuxième 288 branches. Les premier 48 et quatrième 82 échangeurs thermiques sont disposés en parallèle, ce qui limite les pertes de charge du quatrième circuit 270.

L'appareil 12, 212 comprend en outre un module électronique de régulation (non représenté) apte à commander les éléments décrits ci-dessus pour mettre en œuvre un programme de traitement thermique et de renouvellement de l'air du local 18.

La configuration monobloc de l'appareil 12, 212, délimité par une unique enceinte externe 22, permet son installation aisée dans un local 18, avec un faible encombrement et un raccordement facile à l'air extérieur et aux canalisations d'eau du bâtiment 14. En particulier, seuls deux orifices traversants 20 dans la paroi extérieure 16 sont nécessaires pour l'installation 10.

L'installation 110 et l'appareil 112 selon le deuxième mode de réalisation vont maintenant être décrits plus précisément, à l'appui des figures 2 à 5. La description ci-dessus de l'installation 10 et de l'appareil 12, ou en variante de l'installation 210 et de l'appareil 212, se rapportent respectivement à l'installation 110 et à l'appareil 112 avec les mêmes numéros de référence. Cependant, certains éléments décrits ci-dessus ne sont pas représentés sur les figures 2 à 5.

Dans l'appareil 112, les ouvertures d'entrée 24 et de sortie 26 ainsi que les bouches d'entrée 28 et de sortie 30 sont de préférence surdimensionnées par rapport aux débits maximum des ventilateurs 46, 56, 66.

Outre les éléments décrits ci-dessus pour l'appareil 12, l'appareil 112 comporte un premier 114 et un deuxième 116 piquages sur le deuxième circuit 50, respectivement en amont et en aval du deuxième échangeur thermique 68. L'appareil 112 comporte en outre un troisième 118 et un quatrième 120 piquages sur le troisième circuit 60, respectivement en amont et en aval du deuxième échangeur thermique.

L'appareil 112 comporte en outre une première 122, une deuxième 124, une troisième 126 et une quatrième 128 bouches de connexion, reliées respectivement au premier 114, au deuxième 116, au troisième 118 et au quatrième 120 piquages. Chacune desdites bouches de connexion est ménagée en surface de l'enceinte externe 22 et équipée d'un clapet de fermeture (non représenté).

Par ailleurs, dans l'appareil 112, le deuxième circuit 50 comprend une deuxième vanne 130 en aval du premier piquage 114 et le troisième circuit 60 comprend une troisième vanne 132 en amont du quatrième piquage.

Le module complémentaire 115 de l'installation 110 va maintenant être décrit. Le module complémentaire 115 est destiné à augmenter le débit de renouvellement d'air dans le local 18, en coopération avec l'appareil 112.

Le module complémentaire 115 est configuré sous forme monobloc et délimité par une enceinte externe 138. Ladite enceinte a de préférence une forme sensiblement parallélépipédique et est disposée à l'intérieur du local 18.

A l'intérieur de son enceinte externe 138, le module complémentaire comprend un sixième circuit d'air 140, comprenant une sixième entrée 142, une sixième sortie 144 et un quatrième ventilateur 146 disposé entre lesdites sixièmes entrée et sortie. Le module complémentaire 115 comprend en outre un septième circuit d'air 150, comprenant une septième entrée 152, une septième sortie 154 et un cinquième ventilateur 156 disposé entre lesdites septièmes entrée et sortie.

Chacune des sixièmes et septièmes entrées et sorties 142, 144, 152, 154 est formée par une bouche de connexion (non représentée) ménagée en surface de l'enceinte externe 138 du module complémentaire 115.

Le module complémentaire 115 comprend en outre un cinquième échangeur thermique 158 air/air disposé sur les sixième et septième circuits.

De préférence, le module complémentaire 115 comprend en outre: une branche de contournement 159 (figure 2), disposée sur le sixième circuit en parallèle du cinquième échangeur thermique 158 ; et une quatrième vanne 161 disposée sur ladite branche de contournement.

L'appareil 115 comporte en outre une cinquième vanne 134 disposée sur le sixième circuit 140 en amont du cinquième échangeur thermique 158 ; et une sixième vanne 136 disposée sur le septième circuit 150 en amont du cinquième échangeur thermique 158.

Dans les configurations de l'installation 10 représentée sur les figures 2 à 5, la sixième entrée 142 et la septième sortie 154 sont reliées respectivement à la première 122 et à la quatrième 128 bouches de connexion de l'appareil 112 de traitement climatique et de renouvellement d'air, par des gaines aérauliques et phoniques 160.

Dans la première configuration de la figure 2, la sixième sortie 144 et la septième entrée 152 sont reliées respectivement à la deuxième 124 et à la troisième 126 bouches de connexion de l'appareil 112.

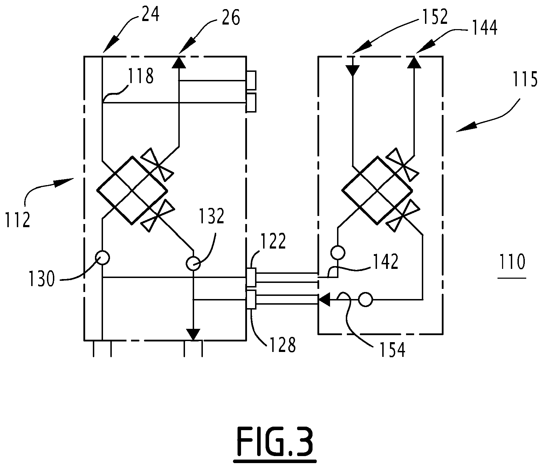

Dans la deuxième configuration de la figure 3, la sixième sortie 144 et la septième entrée 152 ouvrent sur l'intérieur du local 18. Les deuxième 124 et troisième 126 bouches de connexion de l'appareil 112 sont fermées.

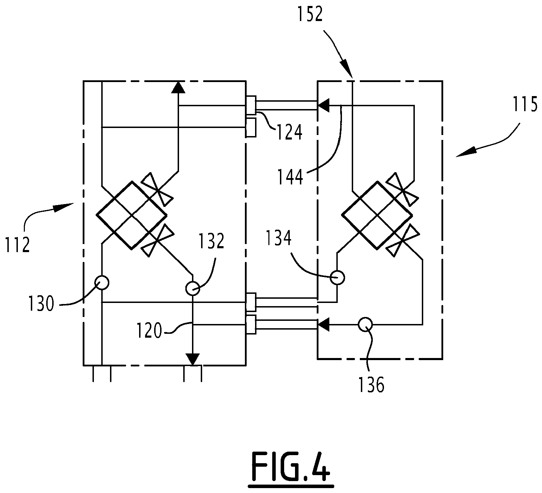

Dans la troisième configuration de la figure 4, la sixième sortie 144 est reliée à la deuxième bouche de connexion 124 de l'appareil 112 ; et la septième entrée 152 ouvre sur l'intérieur du local 18. La troisième bouche de connexion 126 de l'appareil 112 est fermée.

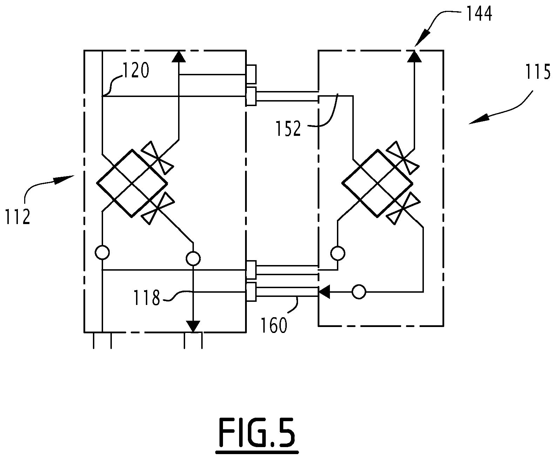

Dans la quatrième configuration de la figure 5, la septième entrée 152 est reliée à la troisième bouche de connexion 126 de l'appareil 112 ; et la sixième sortie 144 ouvre sur l'intérieur du local 18. La deuxième bouche de connexion 124 de l'appareil 112 est fermée.

De préférence, le module complémentaire 115 comprend en outre un module électronique de régulation (non représenté), apte à commander les ventilateurs 146, 156 et à être relié au module électronique de l'appareil 112 selon un mode maître-esclave.

Un procédé de fonctionnement de l'installation 10, 210 et de l'appareil 12, 212 va maintenant être décrit. Sous l'action du premier ventilateur 46, un flux d'air intérieur au local 18 traverse le premier circuit 40 et est, selon les besoins, réchauffé ou refroidi par le premier 48 et/ou le troisième 76 échangeurs thermiques. La mise en série de l'échangeur air/eau 48 et air/fluide frigorigène 76 permet notamment d'optimiser le chauffage ou le refroidissement de l'air en conservant une unique source d'évacuation des calories, en l'occurrence un réseau d'eau froide du bâtiment 14. Un fonctionnement analogue est décrit dans le document FR3011913 précité.

En outre, sous l'action du deuxième ventilateur 56, de l'air neuf est prélevé à l'extérieur du bâtiment 14 et introduit dans le local 18 par l'intermédiaire du deuxième circuit 50. La première vanne 59 permet de contrôler la quantité d'air passant par le deuxième échangeur thermique 68, comme décrit dans le document FR3011913 précité.

De même, sous l'action du troisième ventilateur 66, une partie de l'air intérieur au local 18 est extraite, puis rejetée à l'extérieur du bâtiment 14 par l'intermédiaire du troisième circuit 60. Le deuxième échangeur thermique 68 permet de rapprocher la température de l'air neuf de celle de l'air extrait.

Selon un mode d'utilisation de l'invention, par exemple quand le local 18 est utilisé comme bureau, l'appareil 112 peut être utilisé à la place de l'appareil 12, 212 dans l'installation 10, 210, sans le module complémentaire 115. A titre d'exemple, un bureau nécessite un débit de renouvellement de 80m³/h (cas de 3 personnes).

Il est possible que le local 18 soit modifié, notamment en étant transformé en salle de réunion. A titre d'exemple, une salle de réunion nécessite un débit de renouvellement de 240m³/h (cas de 8 personnes).

Afin d'augmenter les capacités de renouvellement d'air dans le local 18, l'installation 110 est alors mise en place. Plus précisément, le module complémentaire 115 est raccordé à l'appareil 112 déjà installé dans ledit local. Une telle opération est simple à réaliser dans la mesure où le module complémentaire 115 est installé dans le local 18, sans nécessiter le percement d'orifices dans la paroi externe 16.

Il est également possible de réaliser facilement l'opération inverse en déconnectant le module complémentaire 115 de l'appareil 112. Le module complémentaire 115 peut ensuite être déplacé et utilisé dans un autre local du bâtiment 14.

L'installation 110 peut être mise en place dans l'une ou l'autre des configurations représentées sur les figures 2 à 5.

La description ci-dessus du procédé de fonctionnement de l'installation 10, 210 s'applique au fonctionnement de l'installation 110. En outre, l'échange thermique entre l'air neuf et l'air extrait s'effectue en parallèle au niveau des deux échangeurs air/air 68 et 158.

Dans la première configuration de la figure 2, l'air du local 18 est prélevé uniquement au niveau de l'ouverture d'entrée 24 et rejeté uniquement au niveau de l'ouverture de sortie 26.

Dans la deuxième configuration de la figure 3, la septième entrée 152 et la sixième sortie 144 forment respectivement une entrée d'aspiration et une sortie de soufflage d'air supplémentaires dans le local 18.

Dans la troisième configuration de la figure 4, l'installation 110 présente deux entrées d'aspiration et une sortie de soufflage. Dans la quatrième configuration de la figure 5, l'installation 110 présente à l'inverse une entrée d'aspiration et deux sorties de soufflage.

Les quatre configurations ci-dessus permettent ainsi de moduler les zones d'aspiration et de soufflage d'air dans le local 18.

En cas d'inoccupation du local 18, le renouvellement d'air de l'installation 110 est éventuellement désactivé et les deuxième 130 et troisième 132 vannes sont fermées. Des déperditions thermiques au niveau des prises d'air 13 sont ainsi évitées.

De même, en cas d'inoccupation ou de faible occupation du local, le module complémentaire 115 de l'installation 110 peut être désactivé en fermant les cinquième 134 et sixième 136 vannes.

La mise en place et l'utilisation de l'installation 110 permet d'augmenter le débit d'air renouvelé dans le local 18, par rapport à l'appareil 112 utilisé sans module complémentaire 115. Il est ainsi possible de modifier facilement ledit débit d'air en fonction de l'utilisation dudit local 18, ce qui offre une meilleure modularité des locaux.

## Revendications

1. Appareil (112) de traitement climatique et de renouvellement d'air pour un local (18) situé dans un bâtiment (14), comportant :
- un premier circuit (40) d'air intérieur, comprenant une première entrée (42) et une première sortie (44) reliées à l'intérieur du local ; ainsi qu'un premier ventilateur (46) et un premier échangeur thermique (48) disposés entre les premières entrée et sortie ;
- un deuxième circuit (50) d'air neuf, comprenant : une deuxième entrée (52) reliée à l'extérieur du bâtiment ; une deuxième sortie (54) reliée à l'intérieur du local ; ainsi qu'un deuxième ventilateur (56) disposé entre les deuxièmes entrée et sortie ;
- un troisième circuit (60) d'air extrait, comprenant : une troisième entrée (62) reliée à l'intérieur du local ; une troisième sortie (64) reliée à l'extérieur du bâtiment ; ainsi qu'un troisième ventilateur (66) disposé entre les deuxièmes entrée et sortie ;
un deuxième échangeur thermique (68) air/air étant disposé en aval des deuxième et troisième entrées de sorte à permettre un échange thermique entre l'air extrait et l'air neuf,
- un quatrième circuit (70, 270) d'un premier fluide, le premier échangeur thermique (48) étant disposé sur ledit quatrième circuit de sorte à permettre un échange thermique entre ledit premier fluide et l'air intérieur,
ledit appareil étant configuré sous forme monobloc et délimité par une première enceinte externe (22) destinée à être disposée à l'intérieur du local (18) ;
- une ouverture d'entrée (24) et une ouverture de sortie (26) d'air intérieur, destinées à ouvrir sur l'intérieur du local, étant ménagées en surface de ladite première enceinte externe, les première (42) et troisième (62) entrées étant reliées à l'ouverture d'entrée et les première (44) et deuxième (54) sorties étant reliées à l'ouverture de sortie par l'intérieur de ladite première enceinte externe,
- une bouche d'entrée (28) et une bouche de sortie (30) d'air extérieur, destinées à être raccordées à l'extérieur du bâtiment, étant formées sur la première enceinte externe, la deuxième entrée (52) étant reliée à la bouche d'entrée et la troisième sortie (64) étant reliée à la bouche de sortie par l'intérieur de ladite première enceinte externe,
l'appareil étant **caractérisé en ce qu'**il comprend :
- un premier (114) et un deuxième (116) piquages sur le deuxième circuit (50), respectivement en amont et en aval du deuxième échangeur thermique (68) ;
- un troisième (118) et un quatrième (120) piquages sur le troisième circuit (60), respectivement en amont et en aval du deuxième échangeur thermique ;
- une première (122), une deuxième (124), une troisième (126) et une quatrième (128) bouches de connexion, reliées respectivement au premier, au deuxième, au troisième et au quatrième piquages, chacune desdites bouches de connexion étant ménagée en surface de la première enceinte externe (22).

2. Appareil selon la revendication 1, dans lequel le deuxième circuit (50) d'air neuf comprend en outre : une branche (58) de contournement du deuxième échangeur thermique (68) ; et une première vanne (59) disposée sur ladite branche de contournement.

3. Appareil selon la revendication 1 ou la revendication 2, dans lequel la deuxième sortie (54) débouche sur le premier circuit (40) en amont du premier échangeur thermique (48).

4. Appareil selon l'une des revendications précédentes, dans lequel le premier circuit (40) comprend en outre un troisième échangeur thermique (76) disposé entre le premier échangeur thermique et la première sortie,
ledit troisième échangeur thermique étant disposé sur un cinquième circuit (78) d'un deuxième fluide, distinct du quatrième circuit de premier fluide.

5. Appareil selon la revendication 4, dans lequel :
- le premier fluide est de l'eau ;
- le deuxième fluide est un fluide frigorigène ;
- le quatrième circuit (70, 270) comprend : une quatrième entrée (72) et une quatrième sortie (74) ménagées sur la première enceinte externe ; et un quatrième échangeur thermique (82) eau/fluide frigorigène ; et
- le cinquième circuit (78) forme une boucle et fait partie d'une pompe à chaleur (80) disposée l'intérieur de la première enceinte externe, ladite pompe à chaleur comprenant un compresseur (90) et un détendeur (92) reliés aux troisième et quatrième échangeurs thermiques par ledit cinquième circuit, le compresseur comprenant une vanne quatre voies (94) à inversion de cycle.

6. Ensemble de traitement climatique et de renouvellement d'air pour un local (18) situé dans un bâtiment (14), comportant :
- un appareil (112) de traitement climatique et de renouvellement d'air selon l'une des revendications précédentes ; et
- un module complémentaire (115) de renouvellement d'air, configuré sous forme monobloc et délimité par une deuxième enceinte externe (138) destinée à être disposée à l'intérieur du local, ledit module complémentaire comprenant :
- un sixième circuit d'air (140), comprenant une sixième entrée (142), une sixième sortie (144) et un quatrième ventilateur (146) disposé entre lesdites sixièmes entrée et sortie ;
- un septième circuit d'air (150), comprenant une septième entrée (152), une septième sortie (154) et un cinquième ventilateur (156) disposé entre lesdites septièmes entrée et sortie ;
- un cinquième échangeur thermique air/air (158) disposé sur les sixième et septième circuits ; et
- quatre bouches de connexion ménagées en surface de la deuxième enceinte externe, chacune desdites bouches de connexion étant reliée à l'une des sixièmes et septièmes entrées et sorties ;
chacune des bouches de connexion du module complémentaire étant apte à être raccordée à l'une des bouches de connexion (122, 124, 126, 128) de l'appareil (112) de traitement climatique et de renouvellement d'air.

7. Installation (110) de traitement climatique et de renouvellement d'air, comprenant :
- un bâtiment (14) comprenant une paroi extérieure (16), ladite paroi définissant un local (18) situé dans ledit bâtiment ;
- un appareil (112) de traitement climatique et de renouvellement d'air selon l'une des revendications 1 à 5 ; et
- deux canalisations d'air (13) formant saillie par rapport à la première enceinte externe (22), chacune de la bouche d'entrée (28) et de la bouche de sortie (30) d'air extérieur étant reliée à l'une desdites canalisations d'air ;
dans laquelle :
- la paroi extérieure comprend deux orifices traversants (20) débouchant sur le local d'une part, et sur l'extérieur du bâtiment d'autre part ; et
- la première enceinte externe (22) de l'appareil est située dans le local, chacune des deux canalisations d'air étant disposée dans l'un desdits orifices traversants.

8. Installation (110) selon la revendication 7, comprenant en outre un module complémentaire (115) de renouvellement d'air, configuré sous forme monobloc et délimité par une deuxième enceinte externe (138) disposée à l'intérieur du local, ledit module complémentaire comprenant :
- un sixième circuit d'air (140), comprenant une sixième entrée (142), une sixième sortie (144) et un quatrième ventilateur (146) disposé entre lesdites sixièmes entrée et sortie ; chacune desdites sixièmes entrée et sortie étant formée par une bouche de connexion ménagée en surface de la deuxième enceinte externe ;
- un septième circuit d'air (150), comprenant une septième entrée (152), une septième sortie (154) et un cinquième ventilateur (156) disposé entre lesdites septièmes entrée et sortie ; chacune desdites septièmes entrée et sortie étant formée par une bouche de connexion ménagées en surface de la deuxième enceinte externe ; et
- un cinquième échangeur thermique air/air (158) disposé sur les sixième et septième circuits ;
la sixième entrée et la septième sortie étant reliées respectivement à la première (122) et à la quatrième (128) bouches de connexion de l'appareil de traitement climatique et de renouvellement d'air.

9. Installation selon la revendication 8, dans laquelle la sixième sortie (144) et la septième entrée (152) sont reliées respectivement à la deuxième (124) et à la troisième (126) bouches de connexion de l'appareil de traitement climatique et de renouvellement d'air.

10. Installation selon la revendication 8, dans laquelle la sixième sortie (144) et la septième entrée (152) ouvrent sur l'intérieur du local (18).

11. Installation selon la revendication 8, dans laquelle la sixième sortie (144) est reliée à la deuxième bouche (124) de connexion de l'appareil de traitement climatique et de renouvellement d'air; et la septième entrée (152) ouvre sur l'intérieur du local.

12. Installation selon la revendication 8, dans laquelle la septième entrée (152) est reliée à la troisième bouche (126) de connexion de l'appareil de traitement climatique et de renouvellement d'air ; et la sixième sortie (144) ouvre sur l'intérieur du local.

## Patentansprüche

1. Klima- und Luftaufbereitungsvorrichtung (112) für einen Raum (18), der sich in einem Gebäude (14) befindet, aufweisend:
- einen ersten Innenluftkreis (40), umfassend einen ersten Einlass (42) und einen ersten Auslass (44), die mit dem Inneren des Raums verbunden sind; sowie einen ersten Lüfter (46) und einen ersten Wärmetauscher (48), die zwischen dem ersten Einlass und Auslass angeordnet sind;
- einen zweiten Frischluftkreis (50), umfassend: einen zweiten Einlass (52), der mit außerhalb des Gebäudes verbunden ist; einen zweiten Auslass (54), der mit dem Inneren des Raums verbunden ist; sowie einen zweiten Lüfter (56), der zwischen dem zweiten Einlass und Auslass angeordnet ist;
- einen dritten Abluftkreis (60), umfassend: einen dritten Einlass (62), der mit dem Inneren des Raums verbunden ist; einen dritten Auslass (64), der mit außerhalb des Gebäudes verbunden ist; sowie einen dritten Lüfter (66), der zwischen dem zweiten Einlass und Auslass angeordnet ist;
wobei ein zweiter Luft/Luft-Wärmetauscher (68) dem zweiten und dritten Einlass nachgelagert angeordnet ist, so dass ein Wärmeaustausch zwischen der Abluft und der Frischluft gestattet ist,
- einen vierten Kreis (70, 270) eines ersten Fluids, wobei der erste Wärmetauscher (48) auf dem vierten Kreis angeordnet ist, so dass ein Wärmeaustausch zwischen dem ersten Fluid und der Innenluft gestattet ist,
wobei die Vorrichtung einteilig ausgelegt ist und von einem ersten äußeren Behälter (22) begrenzt wird, der bestimmt ist, im Inneren des Raums (18) angeordnet zu sein;
- wobei eine Einlassöffnung (24) und eine Auslassöffnung (26) für Innenluft, die bestimmt sind, sich zum Inneren des Raums zu öffnen, an der Oberfläche des ersten äußeren Behälters eingerichtet sind, wobei der erste (42) und dritte (62) Einlass mit der Einlassöffnung verbunden sind und der erste (44) und zweite (54) Auslass mit der Auslassöffnung innerhalb des ersten äußeren Behälters verbunden sind,
- wobei eine Einmündung (28) und eine Ausmündung (30) für Außenluft, die bestimmt sind, außen am Gebäude angeschlossen zu sein, auf dem ersten äußeren Behälter ausgebildet sind, wobei der zweite Einlass (52) mit der Einmündung verbunden ist und der dritte Auslass (64) mit der Ausmündung innerhalb des ersten äußeren Behälters verbunden ist,
wobei die Vorrichtung **dadurch gekennzeichnet ist, dass** sie umfasst:
- eine erste (114) und eine zweite (116) Abzweigung auf dem zweiten Kreis (50) jeweils dem zweiten Wärmetauscher (68) vorgelagert und nachgelagert;
- eine dritte (118) und eine vierte (120) Abzweigung auf dem dritten Kreis (60) jeweils dem zweiten Wärmetauscher vorgelagert und nachgelagert;
- eine erste (122), eine zweite (124), eine dritte (126) und eine vierte (128) Anschlussmündung, die jeweils mit der ersten, der zweiten, der dritten und der vierten Abzweigung verbunden sind, wobei jede der Anschlussmündungen an der Oberfläche des ersten äußeren Behälters (22) eingerichtet ist.

2. Vorrichtung nach Anspruch 1, wobei der zweite Frischluftkreis (50) ferner umfasst: einen Umgehungszweig (58) des zweiten Wärmetauschers (68); und ein erstes Ventil (59), das auf dem Umgehungszweig angeordnet ist.

3. Vorrichtung nach Anspruch 1 oder Anspruch 2, wobei der zweite Auslass (54) in den ersten Kreis (40) dem ersten Wärmetauscher (48) vorgelagert ausmündet.

4. Vorrichtung nach einem der vorangehenden Ansprüche, wobei der erste Kreis (40) ferner einen dritten Wärmetauscher (76) umfasst, der zwischen dem ersten Wärmetauscher und dem ersten Auslass angeordnet ist,
wobei der dritte Wärmetauscher auf einem fünften Kreis (78) eines zweiten Fluids angeordnet ist, der vom vierten Kreis des ersten Fluids verschieden ist.

5. Vorrichtung nach Anspruch 4, wobei:
- das erste Fluid Wasser ist;
- das zweite Fluid ein Kühlfluid ist;
- der vierte Kreis (70, 270) umfasst: einen vierten Einlass (72) und einen vierten Auslass (74), die auf dem ersten äußeren Behälter eingerichtet sind; und einen vierten Wasser/Kühlfluid-Wärmetauscher (82); und
- der fünfte Kreis (78) forme eine Schleife bildet und zu einer Wärmepumpe (80) gehört, die im Inneren des ersten äußeren Behälters angeordnet ist, wobei die Wärmepumpe einen Kompressor (90) und einen Druckregler (92) umfasst, die mit dem dritten und vierten Wärmetauscher über den fünften Kreis verbunden sind, wobei der Kompressor ein Vierwegeventil (94) mit Zyklusumkehr umfasst.

6. Klima- und Luftaufbereitungsanordnung für einen Raum (18), der sich in einem Gebäude (14) befindet, aufweisend:
- eine Klima- und Luftaufbereitungsvorrichtung (112) nach einem der vorangehenden Ansprüche; und
- ein komplementäres Luftaufbereitungsmodul (115), das einteilig ausgelegt ist und von einem zweiten äußeren Behälter (138) begrenzt wird, der bestimmt ist, im Inneren des Raums angeordnet zu sein, wobei das komplementäre Modul umfasst:
- einen sechsten Luftkreis (140), der einen sechsten Einlass (142), einen sechsten Auslass (144) und einen vierten Lüfter (146) umfasst, der zwischen dem sechsten Einlass und Auslass angeordnet ist;
- einen siebten Luftkreis (150), der einen siebten Einlass (152), einen siebten Auslass (154) und einen fünften Lüfter (156) umfasst, der zwischen dem siebten Einlass und Auslass angeordnet ist;
- einen fünften Luft/Luft-Wärmetauscher (158), der auf dem sechsten und siebten Kreis angeordnet ist; und
- vier Anschlussmündungen, die an der Oberfläche des zweiten äußeren Behälters eingerichtet sind, wobei jede der Anschlussmündungen mit einem von dem sechsten und siebten Einlass und Auslass verbunden ist;
wobei jede der Anschlussmündungen des komplementären Moduls imstande ist, an eine von den Anschlussmündungen (122, 124, 126, 128) der Klima- und Luftaufbereitungsvorrichtung (112) angeschlossen zu sein.

7. Klima- und Luftaufbereitungsanlage (110), umfassend:
- ein Gebäude (14), das eine Außenwand (16) umfasst, wobei die Wand einen Raum (18) definiert, der sich in dem Gebäude befindet;
- eine Klima- und Luftaufbereitungsvorrichtung (112) nach einem der Ansprüche 1 bis 5; und
- zwei Luftkanäle (13), die im Verhältnis zum ersten äußeren Behälter (22) hervorstehen, wobei sowohl die Einmündung (28) als auch die Ausmündung (30) für die Außenluft mit einem der Luftkanäle verbunden ist;
wobei:
- die Außenwand zwei Durchgangsöffnungen (20) umfasst, die zum einen im Raum und zum anderen außerhalb des Gebäudes ausmünden; und
- sich der erste äußere Behälter (22) der Vorrichtung in dem Raum befindet, wobei jeder von den zwei Luftkanälen in einer der Durchgangsöffnungen angeordnet ist.

8. Anlage (110) nach Anspruch 7, die ferner ein komplementäres Luftaufbereitungsmodul (115) umfasst, das einteilig ausgelegt ist und von einem zweiten äußeren Behälter (138) begrenzt wird, der im Inneren des Raums angeordnet ist, wobei das komplementäre Modul umfasst:
- einen sechsten Luftkreis (140), der einen sechsten Einlass (142), einen sechsten Auslass (144) und einen vierten Lüfter (146) umfasst, der zwischen dem sechsten Einlass und Auslass angeordnet ist; wobei sowohl der sechste Einlass als auch Auslass von einer Anschlussmündung gebildet sind, die an der Oberfläche des zweiten äußeren Behälters eingerichtet ist;
- einen siebten Luftkreis (150), der einen siebten Einlass (152), einen siebten Auslass (154) und einen fünften Lüfter (156) umfasst, der zwischen dem siebten Einlass und Auslass angeordnet ist; wobei sowohl der siebte Einlass als auch Auslass von einer Anschlussmündung gebildet sind, die an der Oberfläche des zweiten äußeren Behälters eingerichtet ist; und
- einen fünften Luft/Luft-Wärmetauscher (158), der auf dem sechsten und siebten Kreis angeordnet ist;
wobei der sechste Einlass und der siebte Auslass jeweils mit der ersten (122) und mit der vierten (128) Anschlussmündung der Klima- und Luftaufbereitungsvorrichtung verbunden sind.

9. Anlage nach Anspruch 8, wobei der sechste Auslass (144) und der siebte Einlass (152) jeweils mit der zweiten (124) und mit der dritten (126) Anschlussmündung der Klima- und Luftaufbereitungsvorrichtung verbunden sind.

10. Anlage nach Anspruch 8, wobei sich der sechste Auslass (144) und der siebte Einlass (152) zum Inneren des Raums (18) öffnen.

11. Anlage nach Anspruch 8, wobei der sechste Auslass (144) mit der zweiten Anschlussmündung (124) der Klima- und Luftaufbereitungsvorrichtung verbunden ist; und sich der siebte Einlass (152) zum Inneren des Raums öffnet.

12. Anlage nach Anspruch 8, wobei der siebte Einlass (152) mit der dritten Anschlussmündung (126) der Klima- und Luftaufbereitungsvorrichtung verbunden ist; und sich der sechste Auslass (144) zum Inneren des Raums öffnet.

## Claims

1. An apparatus (112) for climate treatment and air renewal for a room (18) located in a building (14), including:
- a first interior air circuit (40), comprising a first inlet (42) and a first outlet (44) that are connected to the interior of the room; as well as a first fan (46) and a first heat exchanger (48) that are disposed between the first inlet and outlet;
- a second new air circuit (50): a second inlet (52) connected to the exterior of the building; a second outlet (54) connected to the interior of the room; as well as a second fan (56) disposed between the second inlet and outlet;
- a third extracted air circuit (60), comprising: a third inlet (62) connected to the interior of the room; a third outlet (64) connected to the exterior of the building; as well as a third fan (66) disposed between the second inlet and outlet;
a second air/air heat exchanger (68) disposed downstream of the second and third inlets so as to allow a heat exchange between the extracted air and the new air;
- a fourth circuit (70, 270) for a first fluid, the first heat exchanger (48) being disposed on said fourth circuit so as to allow a heat exchange between said first fluid and the interior air, said apparatus being configured in monobloc form and delimited by a first outer enclosure (22) intended to be disposed inside the room (18);
- an inlet opening (24) and an outlet opening (26) for interior air, intended to open onto the interior of the room, being arranged on the surface of said first outer enclosure, the first (42) and third (62) inlets being connected to the inlet opening and the first (44) and second (54) outlets being connected to the outlet opening by the interior of said first outer enclosure,
- an inlet mouth (28) and an outlet mouth (30) for exterior air, intended to be connected to the exterior of the building, being formed on the first outer enclosure, the second inlet (52) being connected to the inlet mouth and the third outlet (64) being connected to the outlet mouth by the interior of said first outer enclosure,
the apparatus being **characterized in that** it comprises:
- a first (114) and a second (116) tapping on the second circuit (50), respectively upstream and downstream of the second heat exchanger (68);
- a third (118) and a fourth (120) tapping on the third circuit (60), respectively upstream and downstream of the second heat exchanger;
- a first (122), a second (124), a third (126) and a fourth (128) connection mouth, respectively connected to the first, second, third and fourth tappings, each of said connection mouths being arranged on the surface of the first outer enclosure (22).

2. The apparatus according to claim 1, wherein the second new air circuit (50) further comprises: a branch (58) for bypassing the second heat exchanger (68); and a first valve (59) arranged on said bypass branch.

3. The apparatus according to claim 1 or claim 2, wherein the second outlet (54) opens onto the first circuit (40) upstream of the first heat exchanger (48).

4. The apparatus according to one of the preceding claims, wherein the first circuit (40) further comprises a third heat exchanger (76) arranged between the first heat exchanger and the first outlet,
said third heat exchanger being arranged on a fifth circuit (78) of a second fluid, separate from the fourth circuit of the first fluid.

5. The apparatus according to claim 4, wherein:
- the first fluid is water;
- the second fluid is a coolant;
- the fourth circuit (70, 270) comprises: a fourth inlet (72) and a fourth outlet (74) arranged on the first outer enclosure; and a fourth water/coolant heat exchanger (82); and
- the fifth circuit (78) forms a loop and is part of a heat pump (80) arranged inside the first outer enclosure, said heat pump comprising a compressor (90) and an expander (92) that are connected to the third and fourth heat exchangers by said fifth circuit, the compressor comprising a four-way valve (94) with cycle inversion.

6. An assembly for climate treatment and air renewal for a room (18) located in a building (14), including:
- an apparatus (112) for climate treatment and air renewal according to one of the preceding claims; and
- an additional air renewal module (115), configured in monobloc form and delimited by a second outer enclosure (138) intended to be arranged inside the room, said additional module comprising:
- a sixth air circuit (140), comprising a sixth inlet (142), a sixth outlet (144) and a fourth fan (146) arranged between said sixth inlet and outlet;
- a seventh air circuit (150), comprising a seventh inlet (152), a seventh outlet (154) and a fifth fan (156) arranged between said seventh inlet and outlet;
- a fifth air/air heat exchanger (158) arranged on the sixth and seventh circuits; and
- four connection mouths arranged on the surface of the second outer enclosure, each of said connection mouths being connected to one of the sixth and seventh inlets and outlets;
each of the connection mouths of the additional module being able to be connected to one of the connection mouths (122, 124, 126, 128) of the climate treatment and air renewal apparatus (112).

7. An installation (110) for climate treatment and air renewal, comprising:
- a building (14) comprising an exterior wall (16), said wall defining a room (18) located in said building;
- an apparatus (112) for climate treatment and air renewal according to one of claims 1 to 5; and
- two air pipes (13) protruding relative to the first outer enclosure (22), each of the exterior air inlet mouth (28) and outlet mouth (30) being connected to one of said air pipes;
wherein:
- the exterior wall comprises two through orifices (20) opening to the room on the one hand, and to the exterior of the building on the other hand; and
- the first outer enclosure (22) of the apparatus is located in the room, each of the two air pipes being arranged in one of said through orifices.

8. The installation (110) according to claim 7, further comprising an additional module (115) for air renewal, configured in monobloc form and delimited by a second outer enclosure (138) arranged inside the room, said additional module comprising:
- a sixth air circuit (140), comprising a sixth inlet (142), a sixth outlet (144) and a fourth fan (146) arranged between said sixth inlet and outlet; each of said sixth inlet and outlet being formed by a connection mouth arranged on the surface of the second outer enclosure;
- a seventh air circuit (150), comprising a seventh inlet (152), a seventh outlet (154) and a fifth fan (156) arranged between said seventh inlet and outlet; each of said seventh inlet and outlet being formed by a connection mouth arranged on the surface of the second outer enclosure; and
- a fifth air/air heat exchanger (158) arranged on the sixth and seventh circuits;
the sixth inlet and the seventh outlet being respectively connected to the first (122) and fourth (128) connection mouths of the apparatus for climate treatment and air renewal.

9. The installation according to claim 8, wherein the sixth outlet (144) and the seventh inlet (152) are respectively connected to the second (124) and third (126) connection mouths of the apparatus for climate treatment and air renewal.

10. The installation according to claim 8, wherein the sixth outlet (144) and the seventh inlet (152) open on the interior of the room (18).

11. The installation according to claim 8, wherein the sixth outlet (144) is connected to the second connection mouth (124) of the apparatus for climate treatment and air renewal; and the seventh inlet (152) opens on the interior of the room.

12. The installation according to claim 8, wherein the seventh inlet (152) is connected to the third connection mouth (126) of the apparatus for climate treatment and air renewal; and the sixth outlet (144) opens on the interior of the room.
